# FASCICULE DE BREVET EUROPEEN

(11) **EP 0 897 508 B1**
(45) Date de publication et mention de la délivrance du brevet: **20.06.2001**
(21) Numéro de dépôt: 97902412.2
(22) Date de dépôt: 31.01.1997
(51) Int. Cl.: F16L 55/033

(54) **CONDUIT D'AIR NOTAMMENT POUR VEHICULE AUTOMOBILE ET SON PROCEDE DE MONTAGE**
LUFTZUFUHRLEITUNG, INSBESONDERE FÜR KRAFTFAHRZEUGE, UND MONTAGEVERFAHREN DAFÜR
AIR DUCT, IN PARTICULAR FOR A MOTOR VEHICLE, AND METHOD FOR MOUNTING THE SAME

(30) Priorité: 01.02.1996 FR 9601453
(43) Date de publication de la demande: 24.02.1999
(73) Titulaire: Illbruck S.A., 68110 Illzach (FR)
(72) Inventeur: DEBELLIS, Gilbert, F-68350 Didenheim (FR); VAUTRIN, Eric, F-54850 Mereville (FR)
(74) Mandataire: Nithardt, Roland
(86) Numéro de dépôt international: FR9700188
(87) Numéro de publication internationale: WO9728397

(56) Documents cités:
- EP-A- 0 338 908
- DE-A- 3 536 379
- DE-A- 3 725 147
- FR-A- 2 712 851
- GB-A- 2 076 943

## Description

La présente invention concerne un conduit d'air destiné à être monté notamment dans la boîte à air, l'habitacle ou sous la planche de bord d'un véhicule automobile. Elle concerne également un procédé de montage du conduit d'air selon la présente invention.

Dans un véhicule automobile, la ventilation de l'habitacle est assurée en dirigeant de l'air vers les bouches d'aération par des conduits se trouvant généralement sous la planche de bord du véhicule qui est une zone difficile d'accès.

Actuellement, les conduits de ventilation sont fabriqués généralement en polypropylène ou autre matériau rigide. Par exemple, la publication allemande DE-A-35 36 379 décrit un conduit d'air réalisé en un matériau autoporteur, tel que de la mousse de polyuréthanne. Ce matériau est donc suffisamment rigide pour assurer la stabilité de la structure du conduit d'air. L'utilisation de ces matériaux rigides aboutit à la réalisation de conduits d'air relativement rigides et peu maniables. C'est pourquoi leur montage sous la planche de bord, qui constitue un espace restreint, est une opération compliquée. La seule solution actuelle consiste à concevoir l'environnement du conduit pour permettre son montage. Toutefois cette solution est peu satisfaisante et représente un coût global important.

D'autre part, le passage de l'air dans le conduit ainsi que les frottements des câbles dans la planche de bord avec ledit conduit génèrent des bruits gênants qui se propagent à l'intérieur du véhicule. Une solution décrite dans le brevet EP 338 908 consiste à garnir les faces intérieure et extérieure d'un conduit en plastique rigide d'un revêtement insonorisant en mousse. Cependant cette solution est particulièrement coûteuse et le conduit de ventilation obtenu est peu maniable et difficilement montable dans un espace restreint, puisqu'il est particulièrement rigide. La publication DE-A-37 25 147 décrit un conduit d'air présentant deux couches, une couche extérieure de structure fermée et une couche intérieure moussée à cellules ouvertes. Cependant, ce conduit, même s'il présente de bonnes propriétés d'isolation, est relativement rigide et ne peut être monté dans des endroits difficilement accessibles.

Une autre solution décrite dans le document FR-A-2 712 851 consiste à placer au moins un manchon atténuateur de bruit sur un conduit d'air usuel. Ledit manchon est constitué d'une paroi extérieure rigide et d'une gaine intérieure en mousse absorbant le bruit. Les extrémités du manchon forment deux embouts qui s'emboîtent sur le conduit d'air. Cette solution est peu avantageuse car l'utilisation des manchons représente une opération de montage supplémentaire et tend à rigidifier l'ensemble, de sorte que son montage est peu aisé.

La présente invention vise à pallier ces inconvénients en proposant un conduit d'air de montabilité exceptionnelle, insonorisant et compatible avec le prix de marché du conduit d'air classique et des systèmes insonorisants liés. Elle propose également un procédé de montage dudit conduit.

Dans ce but, l'invention concerne un conduit du genre indiqué en préambule, caractérisé en ce qu'il est réalisé en polyéthylène moussé ayant une densité apparente de 90 à 150 kg/m³ et une épaisseur de 4 à 6 mm, de sorte qu'il est suffisamment souple et élastique pour reprendre sa forme initiale après avoir été déformé de manière à permettre sa mise en place dans un espace restreint et/ou à travers des passages étroits.

Le conduit d'air peut comporter au moins une couche d'absorbant acoustique pour absorber les bruits. L'absorbant acoustique peut être réalisé en mousse de polyuréthanne. De préférence, la couche d'absorbant acoustique est rapportée à l'intérieur dudit conduit.

D'autre part, le conduit d'air comporte de préférence deux demi-coquilles liées entre elles. Ces deux demi-coquilles peuvent être fabriquées séparément et assemblées manuellement. Elles peuvent être également réalisées par thermoformage et assemblées en fin de thermoformage par soudure.

Dans un mode de réalisation préféré, chaque demi-coquille est réalisée au moyen d'une feuille dudit polyéthylène moussé, ladite feuille pouvant être coupée dans le sens de l'épaisseur de manière à présenter une surface à cellules ouvertes, et chaque demi-épaisseur de feuille est disposée de sorte que les cellules ouvertes sont orientées vers l'intérieur du conduit pour constituer ladite couche d'absorbant acoustique.

L'invention concerne également un procédé de montage d'un conduit d'air selon la présente invention, caractérisé en ce que le conduit d'air est roulé et plié avant d'être mis en place et en ce qu'il retrouve sa forme initiale grâce à ses propriétés de souplesse et d'élasticité après sa mise en place.

La présente invention et ses avantages apparaîtront mieux dans la description suivante d'un exemple de réalisation, en référence aux dessins annexés, dans lesquels:
- la figure 1 représente une vue en coupe longitudinale du conduit d'air selon l'invention,
- la figure 2 représente une section selon II-II du conduit de la figure 1, et
- la figure 3 est similaire à la figure 1, le conduit comportant une couche d'absorbant acoustique rapporté sur sa face intérieure.

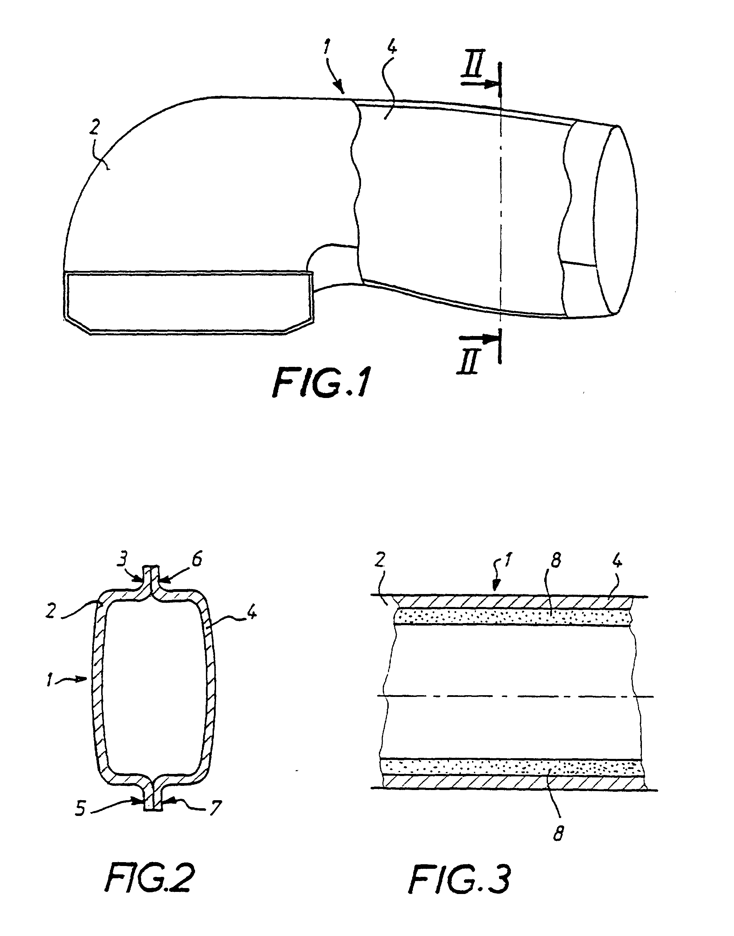

Les figures 1 et 2 montrent un conduit d'air 1 de section sensiblement parallélépipédique comportant deux demi-coquilles 2, 4 liées entre elles par des lèvres latérales 3 et 5, 6 et 7. Le conduit d'air 1 est réalisé dans un matériau suffisamment souple et élastique de sorte que ledit conduit d'air reprend sa forme initiale après avoir été déformé pour permettre sa mise en place dans un espace restreint et/ou à travers des passages étroits. Ce matériau peut être, par exemple, du polyéthylène moussé ayant une densité apparente de 90 à 150 kg/m³ et une épaisseur de 4 à 6 mm.

Selon la forme désirée du conduit d'air, les demi-coquilles 2,4 peuvent être réalisées de manière automatique par thermoformage et les lèvres latérales 3 et 5, 6 et 7 sont assemblées en fin de thermoformage par soudure. Ce procédé permet par ailleurs d'assurer l'étanchéité du conduit. Pour des volumes de conduit compliqués, les demi-coquilles 2, 4 sont fabriquées séparément et les lèvres latérales 3 et 5, 6 et 7 sont assemblées manuellement par collage, par agrafe ou par tout autre moyen connu.

Afin de réduire les bruits en sortie du conduit d'air, ces bruits provenant du passage de l'air dans le conduit et du frottement des câbles à proximité du conduit, il est possible de revêtir les faces extérieures et/ou intérieures du conduit d'une couche d'absorbant acoustique pour absorber les bruits. Ledit absorbant acoustique peut être réalisé en mousse de polyuréthanne.

Dans une forme de réalisation avantageuse, en référence à la figure 3, une couche d'absorbant 8 est rapportée seulement à l'intérieur du conduit d'air 1. En effet, une couche d'absorbant acoustique sur la face extérieure du conduit est inutile car le polyéthylène moussé utilisé pour fabriquer le conduit d'air présente à sa surface des cellules fermées du fait du procédé d'expansion de sorte que les bruits provenant du frottement des câbles de la planche de bord avec ledit conduit ne peuvent pas se propager à l'intérieur dudit conduit. Selon les besoins, la paroi intérieure du conduit 1 peut être intégralement ou partiellement tapissée de mousse absorbante acoustique.

Dans une forme de réalisation préférée, chaque demi-coquille est réalisée en utilisant au départ une feuille de polyéthylène suffisamment souple et élastique d'une épaisseur de 16 mm environ. Le polyéthylène utilisé étant moussé, il présente une structure cellulaire. Ladite feuille est coupée en deux dans le sens de l'épaisseur de manière à présenter une face à cellules ouvertes et une face à cellules fermées du fait du procédé d'expansion. On fabrique alors le conduit d'air 1 en disposant chaque demi-épaisseur de feuille de sorte que les cellules fermées sont orientées vers l'extérieur pour constituer chaque demi-coquille 2, 4 et que les cellules ouvertes sont orientées vers l'intérieur du conduit pour constituer la couche d'absorbant acoustique. En effet, les cellules ouvertes du polyéthylène vont absorber les bruits de ventilateur provenant de l'amont et les bruits de passage de l'air dans le conduit proprement dit de manière à réduire les bruits en sortie.

Grâce au matériau utilisé pour le fabriquer, le conduit d'air selon la présente invention présente une montabilité exceptionnelle particulièrement avantageuse lorsque le conduit doit être monté à travers des passages étroits et/ou dans un espace restreint tel qu'une planche de bord. Le procédé de montage est très simple puisqu'il suffit de rouler et/ou de plier le conduit d'air pour l'introduire dans l'espace où il doit être monté puis de le relâcher pour qu'il reprenne sa forme initiale. Il ne reste plus qu'à coupler les embouts aux conduits correspondants d'une manière connue en soi. Grâce aux propriétés de souplesse et d'élasticité du polyéthylène moussé tel que défini ci-dessus, le conduit retrouve sa forme initiale après sa mise en place.

De plus, il est possible de renforcer l'insonorisation dudit conduit de manière simple et peu coûteuse.

Ainsi, le conduit d'air selon la présente invention a un coût compatible avec le prix de marché des conduits d'air classiques et des systèmes insonorisants liés.

L'invention peut également s'appliquer à des gaines électriques ou à tout autre conduit devant être mis en place à travers des passages étroits et/ou dans des espaces restreints.

## Revendications

1. Conduit d'air destiné à être monté notamment dans la boîte à air, l'habitacle ou sous la planche de bord d'un véhicule automobile, caractérisé en ce qu'il est réalisé en polyéthylène moussé ayant une densité apparente de 90 à 150 kg/m³ et une épaisseur de 4 à 6 mm, de sorte qu'il est suffisamment souple et élastique pour reprendre sa forme initiale après avoir été déformé de manière à permettre sa mise en place dans un espace restreint et/ou à travers des passages étroits.

2. Conduit d'air selon la revendication 1, caractérisé en ce qu'il comporte au moins une couche d'absorbant acoustique pour absorber les bruits.

3. Conduit d'air selon la revendication 2, caractérisé en ce que l'absorbant acoustique est réalisé en mousse de polyuréthanne.

4. Conduit d'air selon l'une des revendications 2 et 3, caractérisé en ce que la couche d'absorbant acoustique est rapportée à l'intérieur dudit conduit.

5. Conduit d'air selon l'une quelconque des revendications précédentes, caractérisé en ce qu'il comporte deux demi-coquilles liées entre elles.

6. Conduit d'air selon la revendication 5, caractérisé en ce que les deux demi-coquilles sont fabriquées séparément et assemblées manuellement.

7. Conduit d'air selon la revendication 5, caractérisé en ce que les deux demi-coquilles sont réalisées par thermoformage et sont assemblées en fin de thermoformage par soudure.

8. Conduit d'air selon l'une quelconque des revendications précédentes, à l'exception des revendications 3 et 4, caractérisé en ce que chaque demi-coquille est réalisée au moyen d'une feuille dudit polyéthylène moussé, ladite feuille étant coupée dans le sens de l'épaisseur de manière à présenter une surface à cellules ouvertes, et en ce que chaque demi-épaisseur de feuille est disposée de sorte que les cellules ouvertes soient orientées vers l'intérieur du conduit pour constituer ladite couche d'absorbant acoustique.

9. Procédé de montage d'un conduit d'air selon la revendication 1, caractérisé en ce que le conduit d'air est roulé et plié avant d'être mis en place et en ce qu'il retrouve sa forme initiale grâce à ses propriétés de souplesse et d'élasticité après sa mise en place.

## Claims

1. Air duct designed to be mounted in particular in the air box, the passenger compartment or under the dashboard of a motor vehicle, characterised in that it is made of foamed polyethylene with an bulk density of 90 to 150 kg/m3 and a thickness of 4 to 6 mm, so that it is flexible enough for it to return to its initial shape after having been deformed to allow it to be put in place in a confined space and/or through narrow passages.

2. Air duct according to claim 1, characterised in that it comprises at least one layer of sound absorber to absorb noise.

3. Air duct according to claim 2, characterised in that the sound absorber is made of polyurethane foam.

4. Air duct according to one of claims 2 and 3, characterised in that the layer of sound absorber is placed inside said duct.

5. Air duct according to any of the previous claims, characterised in that it comprises two female moulds connected to one another.

6. Air duct according to claim 5, characterised in that the two female moulds are manufactured separately and assembled manually.

7. Air duct according to claim 5, characterised in that the two female moulds are made by thermoforming and are assembled at the end of the thermoforming by welding.

8. Air duct according to any of the previous claims except claims 3 and 4, characterised in that each female mould is made be means of a sheet of said foamed polyethylene, said sheet being cut in the direction of the thickness so as to present a surface with open cells, and in that each half thickness of sheet is arranged so that the open cells are pointing inside the duct to form said layer of sound absorber.

9. Method for mounting an air duct according to claim 1, characterised in that the air duct is rolled and folded before being put in place and in that it returns to its initial shape due to its flexibility and elasticity properties after being put in place.

## Patentansprüche

1. Luftkanal, dazu bestimmt, insbesondere in den Luftkasten, in das Karrosseriegehäuse oder unter das Instrumentenbrett eines Kraftfahrzeuges montiert zu werden, dadurch gekennzeichnet, daß er aus verschäumten Polyethylen mit einer Rohdichte von 90 bis 150 Kg/m³ und einer Dicke von 4 bis 6 mm hergestellt ist, so daß er flexibel und elastisch genug ist, um seine ursprüngliche Form wieder einzunehmen nachdem er verformt wurde um seinen Einbau in einem beengten Raum und/oder durch enge Durchgänge zu ermöglichen.

2. Luftkanal gemäß Anforderung 1, dadurch gekennzeichnet, daß er mindestens eine schalldämpfende Lage aufweist, um die Geräusche aufzunehmen.

3. Luftkanal gemäß Anforderung 2, dadurch gekennzeichnet, daß die schalldämpfende Lage aus Polyurethanschaum hergestellt ist.

4. Luftkanal gemäß einer der Anforderungen 2 und 3, dadurch gekennzeichnet, daß die schalldämpfende Lage innerhalb des besagten Kanals angebracht ist.

5. Luftkanal gemäß irgendeiner der vorhergehenden Anforderungen, dadurch gekennzeichnet, daß er zwei miteinander verbundene Halbschalen beträgt.

6. Luftkanal gemäß Anforderung 5, dadurch gekennzeichnet, daß die beiden Halbschalen separat hergestellt und manuell zusammengefügt werden.

7. Luftkanal gemäß Anforderung 5, dadurch gekennzeichnet, daß die beiden Halbschalen durch Warmverformung hergestellt werden und nach der Warmverformung durch Schweißen zusammengefügt werden.

8. Luftkanal gemäß irgendeiner der vorhergehenden Anforderungen, mit Ausnahme der Anforderungen 3 und 4, dadurch gekennzeichnet, daß jede Halbschale aus einem Blatt des besagten verschäumten Polyethylens hergestellt wird, wobei das besagte Blatt in seiner Dicke aufgeschnitten wird um eine Fläche mit offenen Zellen aufzuweisen, und dadurch, daß jede Blatt-Halb-Dicke so angeordnet ist, daß die offenen Zellen zu dem Inneren des Kanals hin gerichtet sind, um die besagte schalldämpfende Lage zu bilden.

9. Montage-Verfahren eines Luftkanals gemäß Anforderung 1, dadurch gekennzeichnet, daß der Luftkanal aufgerollt und zusammengefaltet ist, bevor er montiert wird, und dadurch, daß er dank seiner Flexibilitäts- und Elastizitäts-Eigenschaften seine ursprüngliche Form nach seiner Montage wieder einnimmt.
